# EUROPÄISCHE PATENTSCHRIFT

(11) **EP 2 888 946 B1**
(45) Veröffentlichungstag und Bekanntmachung des Hinweises auf die Patenterteilung: **04.07.2018**
(21) Anmeldenummer: 13199577.1
(22) Anmeldetag: 24.12.2013
(51) Int. Cl.: A23C 21/06, A23C 21/08, A23L 27/00, A23L 27/60, A23L 29/231

(54) **Verwendung von Pektin zur Verbesserung der sensorischen Eigenschaften von Sauermolke-basierten Zubereitungen**
Use of pektin for improving the sensorial properties of compositions based on acidic whey
Utilisation de pektin pour améliorer les qualités sensorielles de compositions a base de petit-lait acidulé

(43) Veröffentlichungstag der Anmeldung: 01.07.2015
(73) Patentinhaber: DMK Deutsches Milchkontor GmbH, 27404 Zeven (DE)
(72) Erfinder: Borcherding, Katja, 27404 Zeven (DE); Hoch, Matthias, 27404 Zeven (DE)
(74) Vertreter: Fabry, Bernd

(56) Entgegenhaltungen:
- EP-A1- 0 887 020
- EP-A1- 2 149 307
- WO-A1-00/08952
- WO-A1-97/03574
- DE-B- 1 053 295
- JP-A- S62 111 632
- US-A- 5 102 681
- TRUE L C ET AL: "Utilization of Acid Whey As A Base For Salad Dressings", CULTURED DAIRY PRODUCTS JOURNAL, AMERICAN CULTURED DAIRY PRODUCTS INSTITUTE, US, Bd. 7, Nr. 3, 1. Januar 1972 (1972-01-01), Seiten 14-15, XP009177565, ISSN: 0045-9259

## Beschreibung

### GEBIET DER ERFINDUNG

Die Erfindung befindet sich auf dem Gebiet der Milchprodukte und betrifft die Verwendung von Pektin zum Verbessern und Aufwerten der sensorischen Eigenschaften der Sauermolke-basierenden Zubereitungen und den daraus resultierenden Endprodukten.

### STAND DER TECHNIK

Sauermolke oder auch nur Molke (auch Käsewasser, Sirte oder Schotte) genannt, ist die wässrige grünlich-gelbe Restflüssigkeit, die bei der Herstellung von Milchprodukten weltweit in einer Menge von ca. 82 Millionen Tonnen pro Jahr anfällt. Sie besteht zu 94% aus Wasser, zu 4 bis 5% aus Milchzucker und ist nahezu fettfrei. Es gibt zwei Sorten Molke: die Süßmolke (auch Labmolke), die entsteht, wenn man Milch mit Lab zur Käseherstellung dicklegt. Sauermolke entsteht, wenn man die Milch mit Milchsäurebakterien behandelt. Nachdem das Eiweiß als Käse oder Quark abgetrennt ist, verbleibt die Molke und stellt in der Regel ein Abfallprodukt dar. Molke enthält neben Milchsäure, noch Vitamine B1, B2 und B6 sowie Kalium, Calcium, Phosphor und andere Mineralstoffe, doch vor allem bis 1% Molkenprotein. Nach Abtrennung der hochwertigen Molkenproteine durch Ultrafiltration verbleibt ein Reststoff, der durch seinen hohen CSB-Gehalt (CSB: chemischer Sauerstoffbedarf) nur unter hohem Kosteneinsatz zu entsorgen ist. Die Hauptkomponente ist neben den anorganischen Salzen der Milchzucker (Lactose), der aufgrund seiner schwachen Süßkraft in der Lebensmittelindustrie nur geringe Bedeutung hat. Lactose kann aber mit Hilfe von Milchsäurebakterien zu Milchsäure (Lactat) umgesetzt werden, die als Konservierungs- und Säuerungsmittel in der Lebensmittelherstellung Verwendung findet und als Grundstoff in der chemischen Industrie - zum Beispiel in der Produktion von Polylactiden, biologisch abbaubaren Kunststoffen - eingesetzt werden kann.

Im Gegensatz zu Sauermolke kann Süßmolke zur Herstellung von Molkenkäse verwendet werden. Hierbei wird die Süßmolke erhitzt, und die flockige Masse, die sich nach dem Erhitzen absetzt, ist der Ausgangsstoff für die Erzeugung von Molkenkäse. Oftmals wird die Süßmolke noch angesäuert- Bekannte Käsesorten, die aus Süßmolke hergestellt wird, sind beispielsweise Ricotta, Ziger oder der norwegische Braunkäse. Ansonsten wird Molke in verschiedenen Erfrischungsgetränken zugesetzt.

Im deutschen Sprachgebrauch wird unter Dressing, Salatsaucen verstanden, die im klassischen Sinne häufig aus Essig und Öl bestehen. Darüber hinaus gibt es auch Salatsaucen auf Basis von Milchprodukten und Mayonnaise. Diese sind von Natur aus cremiger, weil die Grundprodukte bereits eine Emulsion darstellen. Salatsaucen auf Joghurtbasis haben einen mildsäuerlichen Grundgeschmack, sind etwas dickflüssiger und bieten sich daher auch als Dip an. Ebenfalls verwendet wird, süße Sahne für einen samtigen, und saure Sahne oder Buttermilch für einen säuerlichen Geschmack sowie Creme fraiche für eine sämigere Emulsion.

Dressing oder Mayonnaise, kann eine Öl- in Wasser oder Wasser-in-ÖI Emulsion darstellen. Die industrielle Herstellung von Mayonnaise erfolgt fast ausnahmslos unter Einsatz hochtouriger Homogenisiermaschinen, sogenannter Kombinatoren. Vor allem finden Zahnkranzdispergiermaschinen und Kolloidmühlen Verwendung, die nach dem Rotor-Stator-Prinzip arbeiten. Die Rohemulsion wird durch das Rotor-Stator-System der Maschine gepumpt, wobei durch Druck bzw. heftige Strömungen Scherkräfte entstehen, deren Stärke die Festigkeit der Öltropfen übertreffen, sodass diese in feinste Teilchen zerrissen und gleichmäßig in der Emulsion verteilt werden. Dabei wird Eigelb mit Gewürzstoffen (Salz, Pfeffer und etwas Flüssigkeit (Wasser, Zitronensaft, Essig)) verrührt. Unter starkem Rühren wird Öl zugegeben. Zu Beginn des Emulgierens ist es wichtig, dass das Öl nur tropfenweise zugegeben wird, um ein "Umkippen" (Brechen) der Emulsion zu verhindern. Bei einer umgekippten Emulsion wäre nicht mehr die wässrige Phase, sondern die Ölphase die kontinuierliche Phase der Emulsion. Ein solches Gemenge zeigt Eigenschaften einer Essig-Öl-Salatsauce und kann nicht zu einer für Mayonnaise typischen, pastösen Masse geschlagen werden. Später kann das Öl auch in einem dünnen Strahl zugegeben werden, da das System dann wesentlich unempfindlicher reagiert und nicht mehr zum Umkippen neigt. Um die Salmonellengefahr auszuschließen, kann man mit pasteurisiertem oder hart gekochtem Eigelb arbeiten. Die emulgierenden Eigenschaften des Lecithins sind auch im erstarrten Eigelb noch voll wirksam. Oder das Eigelb wird durch Milch ersetzt. Dann wirken die Milchproteine als Emulgator.

Saucen (bzw. Soßen) hingegen basieren grundsätzlich auf aromatischen Flüssigkeiten wie Fonds, Weinen, Ölen oder Milchprodukten, die durch verschiedene Verfahren gebunden bzw. angedickt werden. Hierfür benutzt man typischerweise Mehl (Mehlschwitze), Stärke, Ei und / oder kalte Butter. Durch die veränderte Konsistenz werden die anderen Speisebestandteile verbunden und Inhaltsstoffe direkt mit ihnen kombiniert. Saucen bestimmen zumeist maßgeblich durch die Zusammenstellung der enthaltenen Zutaten und Konzentration der Aromen den Charakter und Geschmack eines Gerichts.

Zumeist ist also die Grundbasis von Dressings, Mayonnaisen, Saucen und/oder essbaren Emulsionen eine Milchbasis. So wird in EP 2055199 B1 ein Dressing offenbart, auf Basis einer Fettphase, welche konjugierte Linolensäuren oder Derivate daraus umfassen.

In EP 0689773 B1 wird eine Mayonnaise bzw. Dressingzusammensetzung offenbart, welche ebenfalls auf Milch basiert. Vorzugsweise Buttermilch oder Magermilch. TRUE L C ET AL: "Utilization of Acid Whey As A Base For Salad Dressings", CULTURED DAIRY PRODUCTS JOURNAL, AMERICAN CULTURED DAIRY PRODUCTS INSTITUTE, US, Bd. 7, Nr. 3, 1. Januar 1972 (1972-01-01), Seiten 14-15, XP009177565, ISSN: 0045-9259 offenbart die Verwendung von Sauermolke als Grundlage für die Herstellung von Salatsaucen und Salatdressings mit verbesserten organoleptischen Eigenschaften und Stabilität. Es wird eine "Thousand Island Dressing" offenbart, welche folgende Bestandteile enthält: ca. 90 Gew.-% Sauermolke, ca. 3 Gew.-% Salatöl, ca. 1 Gew.-% Stabilisator, ca. 10 Gew.-% Zucker. Die Salatsauce wird hergestellt durch: Erwärmen der Mischung auf 80°C, Halten der Mischung für 5 Minuten, Emulgieren der Mischung mit einem Homogenisator und Kühlen der Mischung auf 21°C. Als Stabilisator werden modifizierte Tapiokastärke (Emplex), Guargummi, CMC, mikrokristalline Zellulose und SSL (Emplex) genannt. Die Sauce enthaltend Emplex ergab im Paneltest die besten organoleptischen Eigenschaften.

Die Aufgabe der vorliegenden Erfindung bestand nun darin, den Geschmack von Sauermolke-basierenden Produkten, insbesondere den Endprodukten, wie Dressing, Saucen etc. derart zu verbessern, dass die unangenehmen Geschmacksnoten unterdrückt werden und die angenehmen Geschmacksnoten, wie süß, sauer, salzig oder umami, je nachdem welche Geschmacksrichtungen im Endprodukt erwünscht sind, unterstützt hervortreten können. Zudem war es Aufgabe der vorliegenden Erfindung eine neue Kombination von Komponenten mit Sauermolke zu finden, die als Halbfertigprodukt (Basis) angeboten werden kann, und im Endprodukt, wie in Dressings, Mayonnaisen, Saucen und/oder essbaren Emulsionen verwendet wird, und die genannte die geschmackliche Verbesserung aufweist. Ferner sollte diese geschmacklich verbesserte Sauermolke-basierende Basiszubereitung sowohl kostengünstig als auch eine gute Stabilität aufweisen und eine Grundrezeptur für breite Anwendungsgebiete darstellen. Eine weitere Aufgabe war es, einen möglichen Ersatz zur Reduzierung des Eigelbanteils in den Basisrezepturen bereitzustellen, um einerseits einen ernährungsphysiologischen Vorteil zu erzielen, und anderseits eifreie Endprodukte bereitstellen zu können, wobei gleichzeitig die Stabilität der Zusammensetzung nicht darunter leiden sollte.

### BESCHREIBUNG DER ERFINDUNG

Es wurde nun überraschenderweise gefunden, dass Pektin in einer Sauermolke-basierenden Zubereitung eine effiziente Komponente in solchen Zusammensetzungen ist, insbesondere in Dressings, Mayonnaisen, Saucen und/oder essbaren Emulsionen. Der beanspruchte Gegenstand wird im Anspruchssatz definiert.

Sauermolke weist nicht nur einen ernährungsphysiologisch hohen Wert auf, sondern es hat sich weiterhin herausgestellt, dass Sauermolke wegen seines hohen Wasseranteils als Ersatz für Wasser während der Herstellung fungiert, und somit im Produktionsschritt gespart werden kann. Zudem hat sich überraschenderweise gezeigt, dass der Proteinanteil in der Sauermolke zur Stabilität des Endproduktes beiträgt, so dass der Eigelbanteil reduziert werden kann oder sogar bei eifreien Produkten ganz weggelassen werden kann.

Die Erfindung betrifft daher die Verwendung von Pektin zur Verbesserung, Aufwertung und Unterstützung der sensorischen Eigenschaften von Sauermolke-basierenden Zubereitungen.

In einer bevorzugten Ausführungsform umfasst eine solche Sauermolke-basierenden Zubereitung Pektin in einem Bereich von von 0.1 Gew.% bis 1.2 Gew.%.

In einer bevorzugten Ausführungsform ist das Milcherzeugnis ausgewählt aus der Gruppe bestehend Joghurt, Dickmilch, Creme fraiche, saure Sahne, Schmand, Kefir (Kefir mild), wobei besonders bevorzugt Joghurt, saure Sahne, Creme fraiche und / oder Schmand in der Sauermolke basierende Zusammensetzung verwendet wird. Die Milcherzeugnisse werden vorzugsweise aus Mager-, Rahm- oder Milch mit standardisiertem Fettgehalt hergestellt. Besonders bevorzugt wird Joghurtmilch eingesetzt, welche vorzugsweise Mager-, Rahm- oder Standardmilch ist, und vorzugsweise ein Fettgehalt von 0.1 bis 4.1 Gew. % aufweist, bevorzugt ist es Magermilch mit ca. 0.1 Gew.% Fettgehalt oder Standardmilch mit 3.8 bis 4.1 Gew.% Fettgehalt.

Bevorzugt werden in der Sauermolke basierte Zusammensetzung, Pektine eingesetzt, welche ausgewählt sind aus der Gruppe bestehend aus Apfelpektine und/ oder Citruspektine. Be-sonders bevorzugt ist hierbei beispielsweise Pektin Classic CM 201 von Herbstreith & Fox oder Pektin der Firma C.E. Roeper GmbH oder der Firma W. Behrens GmbH & Co. KG oder der Firma Birkamidon Rohstoffhandels GmbH oder der Firma Tate & Lyle.

In einer bevorzugten Ausführungsform stammt das Eigelb in der Sauermolke basierende Zusammensetzung aus Gesamteigelb, Eigelbpulver, enzymatisch behandeltes Eigelbpulver oder separierte Eigelbfraktionen, wie beispielsweise Plasma- und/ oder Granulafraktionen. Vorzugsweise ist das Eigelb Eigelbpulver, beispielsweise Hühnereigelbpulver hitzestabil, sprühgetrocknet, pasteurisiert von Sanova Foods A/S oder Hühnereigelbpulver Emultherm KSMS-Mix von Ovobest Eiprodukte GmbH & Co. KG. Auch bevorzugt sind die Eigelbfraktionen, Granula- und Plasmafraktionen, wobei die Plasmafraktion beson-ders bevorzugt wird.

Eigelbfraktionen, die Granula- und Plasmafraktionen sind, können sowohl im Laborals auch im Produktionsmaßstab, mittels zentrifugaler Trennung von Eigelb gewonnen werden. Dabei liegt der Fokus auf den produktspezifischen (pH-Wert, lonenstärke, Calciumgehalt) sowie prozessseitigen Einflussgrößen (g-Zahl, Verweilzeit, Temperatur). Die in der zentrifugalen Trennung gewonnen Granula- und Plasmafraktionen werden in einem nachfolgenden Prozessschritt sprühgetrocknet. Hierbei erfolgt zumeist eine spezifische Funktionalisierung der Reinfraktionen durch eine enzymatische Modifikation sowie eine Anpassung der Milieubedingungen. Die getrennte enzymatische Modifikation der reinen Granula- und Plasma-Fraktionen erlaubt ein separates Einstellen der Milieubedingungen (lonenstärke, pH-Wert), so dass eine gezielte Steigerung des enzymatischen Effekts möglich ist. Die getrennt gewonnen und separat PLA2 modifizierten und milieuangepassten Granula- und PlasmaFraktionen werden dann zumeist separat getrocknet. Dabei können die thermischen Bedingungen (Lufteintritts- und Luftaustrittstemperatur, Verweilzeit) im Trockner für beide Fraktionen in unterschiedlicher Weise eingestellt werden und daraus resultierend die Funktionalität der Fraktionen als strukturgebende Komponenten in weiten Bereichen variiert werden. Die Eigelbfraktionierung wird im FEI (Forschungskreis der Ernährungsindustrie e.V. (FEI), Bonn) AiF 15512N beschrieben und ist dem Fachmann bestens bekannt, so dass es zur Durchführung keine weiteren Erläuterungen bedarf, da sie dem allgemeinen Fachwissen zuzurechnen sind.

In einer bevorzugten Ausführungsform wird die Sauermolke-basierende Zubereitung, umfassend das Pektin als ein Halbfertigprodukt bereitgestellt, welche weiter zu einem Dressing, einer Creme, einer Soße und/ oder einer essbaren Emulsion und/oder zu essbaren Schäume, verarbeitet werden kann.

Die Dressings, Creme, Soßen und/ oder essbaren Emulsionen und/oder essbare Schäume können zusätzliche Inhaltstoffe umfassen, wie beispielsweise Süßstoffe, Lebensmittelsäure, Verdickungsmittel, Reduktionsmittel, Aromastoffe, Vitamine, Prebiotische Stoffe, Probiotische Stoffe, Geschmacksverstärker, Wirkstoffe zur Maskierung von unangenehmen Geschmackseindrücken, Antioxidantien, Lebensmittelfarbstoffe und Gemischen davon.

Vorzugsweise können der Sauermolke basierte Zusammensetzung weitere ernährungsphysiologische Zusätze während der Herstellung zugegeben werden, wie beispielsweise Buttermilch, Molkenproteinkonzentrat (WPC =whey protein concentrate), Molkenprotein-Isolat und/ oder Molkenproteinhydrolysat

Die genannten Inhaltstoffe und Zusätze sind hier nur beispielhaft aufgeführt und bilden keine abschließende Liste. Alle für den Nahrungsmittelbereich zugelassenen Stoffe können bei der Verarbeitung hinzugegeben werden, sofern sie für das entsprechende Produkt zweckdienlich sind. Weiter unten in der Beschreibung werden die zusätzlichen Inhaltstoffe detaillierte beschrieben und ausgeführt.

Ein weiterer Gegenstand der Erfindung ist die Verwendung des Pektins in Sauermolke-basierende Zubereitungen als Basis für Dressings, Cremes, Saucen und/ oder essbare Emulsionen und/oder essbare Schäume.

Unter Dressings werden in der vorliegenden Erfindung Salatsaucen auf Basis von Milchprodukten verstanden. Vorzugsweise auf Joghurtbasis. Ebenfalls verwendet wird süße Sahne für einen samtigen und zarten Geschmack. Und saure Sahne oder Buttermilch für einen säuerlichen Geschmack sowie Creme fraiche für eine sämigere Emulsion. Ein Dressing kann eine Öl- in Wasser oder Wasser-in-ÖI Emulsion darstellen.

Unter Soßen (oder Saucen) werden in vorliegenden Erfindung Soßen verstanden, die vor-zugsweise eine O/W oder W/O-Emulsion bilden, und zumeist auf Basis von Milchprodukten, die gebunden oder eingedickt werden mit Mehl, Stärke, Ei oder Butter. Vorzugsweise sind solche Soßen ausgewählt aus: Sauce Bechamel (Milchrahmsauce), Sauce Hollandaise, Sauce Mayonnaise, Sauce Bernaise, Rouille und Grüne Sauce. Vorzugsweise ist eine sauce Mayon-naise dabei ausgewählt aus: Mayonnaise, Aioli, Cocktailsauce, Sauce Gloucester, Sauce Re-moulade, Sauce Tartare und Grüne Sauce.

Unter Cremes werden in der vorliegenden Erfindung beispielsweise Salatcremes verstanden, welche eine Ableitung der Mayonnaise ist, und vorzugsweise weniger Fett enthält als die Mayonnaise.

Unter essbare Emulsionen werden in der vorliegenden Erfindung O/W- und W/O - Emulsionen verstanden, die aus der erfindungsgemäße Sauermolke-basierenden Zubereitung herstellbar sind, und welche ebenfalls in Form einer Creme oder Sauce vorliegen kann.

Vorzugsweise können die genannten Dressings, Cremes, Saucen und/ oder essbare Emulsionen und/oder essbare Schäume, welche auf der Basis der erfindungsgemäßen Sauermolke-Zusammensetzungen hergestellt werden, auch als kalte Sauce, Dipp oder Brotaufstrich oder für Fleisch oder Fisch verwendet werden.

Unter dem Wort "Basis" für Dressings, Cremes, Saucen und/ oder essbare Emulsionen und/oder essbare Schäume wird in der vorliegenden Erfindung verstanden, dass die Sauermolke-basierenden Zubereitung ein Lebensmittelgrundzusammensetzung darstellt, aus der mit geringem Aufwand, das verkaufsfertige Endprodukt entsteht. Dies bedeutet, dass beispielsweise durch die Zugabe von lediglich wenigen weiteren Zusätzen (Inhaltsstoffen) zu der Sauermolke-basierenden Zubereitung, bereits ein Endprodukt erhalten wird, mit dem vom Verbraucher oder Kunden gewünschten Geschmack oder organoleptischen Vorstellungen. Eine solche Grundrezeptur vereinfacht den Herstellungsprozess für Dressings, Cremes, Saucen und/ oder essbare Emulsionen und bietet Einsparpotential im Bereich der Produktion und eine schnelle Verarbeitung.

Besonders bevorzugt ist hierbei die Verwendung der Sauermolke-basierenden Zubereitung als Basis für Salatdressings/-cremes, Feinkostdressings/-cremes, Mayonnaise, Tzaziki und/oder Dip-Soßen. Besonders bevorzugt wird die Sauermolke-Basiszusammensetzung für Salatdressings/-cremes, Feinkostdressings/-cremes und/oder Mayonnaise eingesetzt.

Ein Vorteil bei der vorliegenden Erfindung besteht darin, dass durch die Verwendung der pektinhaltigen Sauermolke-basierenden Zubereitung, die eingesetzte Sauermolke den Wasseranteil in Dressings, Cremes, Soßen und/ oder essbare Emulsionen und/oder essbare Schäume bereits ersetzt, so dass kein zusätzliches Wasser bei der Herstellung des Endproduktes hinzugefügt werden muss.

Der Ersatz des Wasseranteils durch Sauermolke erfolgt durch den Wassergehalt, der bereits in der Sauermolke enthalten ist, so dass dadurch die Zugabe von Wasser und somit ein Schritt im Produktionsverfahren eingespart werden kann. Die für die Herstellung der Dressings, Cremes, Soßen und/ oder essbare Emulsionen und/oder essbare Schäume benötigten Wasseranteils wird vor-zugsweise 1:1 durch den Wasseranteil in der Sauermolke bereits ersetzt.

Die Verwendung von Sauermolke als Hauptkomponente und Basis für Dressings, Cremes, Soßen und/ oder essbare Emulsionen und/oder essbare Schäume, ist besonders vorteilhaft, da die Sauermolke einen hohen ernährungsphysiologischen Nutzen bzw. Wert aufweist.

Ernährungsphysiologische Nutzen und Wert einer erfindungsgemäßen Sauermolke basierenden Zusammensetzungen resultiert beispielsweise aus dem geringen Fett- und Kaloriengehalt der Sauermolke. Zudem wirkt die Molke positiv auf den Verdauungstrakt. Der Milchzucker in der Molke, gelangt teilweise in den Dickdarm und kann von Milchsäurebakterien zu Milch-säure abgebaut werden. Das Wachstum dieser gesundheitsfördernden Darmbakterien und ein ausgeglichenes Milieu im Darmtrakt werden gefördert. Die Molkenproteine sind sehr gut verdaulich. Sie enthalten reichlich essenzielle Aminosäuren in einem ausgewogenen Verhältnis, so dass die biologische Wertigkeit sehr gut ist. Immunglobuline, Laktoferrin und andere Substanzen des Molkeneiweißes wirken bioaktiv, beispielsweise fördern sie die Abwehrkräfte des Körpers oder begünstigen die Resorption von Nährstoffen.

Ein weiterer Vorteil bei der Verwendung der vorliegenden Sauermolke-basierenden Zubereitung ist, dass es als Emulgatorsystem in Dressings, Cremes, Soße und/ oder essbare Emulsionen und / oder essbare Schäumen eingesetzt werden kann, um das Produkt zu stabilisieren.

Unter einem Emulgatorsystem wird in der vorliegenden Erfindung eine Gruppe von verschiedenen Substanzen verstanden, die zusammen, bevorzugt in synergistischer Weise, als Emulgator wirken. Vorzugsweise weist ein solches Emulgatorsystem mindestens zwei, drei, vier oder fünf Komponenten (Substanzen) auf. Bevorzugt weist ein erfindungsgemäßes Emulgatorsystem mindestens Sauermolke auf oder eine Kombination aus Sauermolke und WPC (= whey protein concentrate, Molkenprotein) oder eine Kombination aus Sauermolke und WPC (= whey protein concentrate, Molkenprotein) und Eigelb, auf. Vorzugsweise ist Eigelb ausgewählt aus Gesamteigelb, Eigelbpulver oder Eigelbfraktionen (Plasma- und Granulafraktion), besonders bevorzugt hierbei sind Eigelbpulver oder Plasmafraktionen.

Bei der Herstellung von Dressings, Cremes, Soßen und/ oder essbare Emulsionen und/oder essbare Schäume wird in einem ersten Schritt Joghurt hergestellt, welches vorzugsweise Magermilchjoghurt oder Standardmilchjoghurt ist. In einem nächsten Schritt wird der Joghurt mit Sauermolke vermischt und so die erfindungsgemäße Sauermolkebasis erhalten. Zuletzt wird die Sauermolke-Basiszusammensetzung zum Endprodukt (Dressings, Cremes, Soßen und/ oder essbare Emulsionen und/oder essbare Schäume) verarbeitet.

Die bei der Herstellung der Sauermolke basierende Zubereitung oder des Endproduktes verwendete Milch kann von Kühen, aber auch von anderen Milch gebenden Tieren, wie beispielsweise Schafe, Ziegen, Pferde und Kamele gewonnen werden.

### HERSTELLUNG VON MAGERMILCH

Zur Herstellung der Magermilch für die Sauermolke basierende Zusammensetzung, findet zunächst eine Abtrennung von festen Nichtmilchbestandteilen sowie die Entrahmung des Fettanteils von etwa 4 Gew.-% aus der Rohmilch statt. Dies findet üblicherweise in einem speziellen Bauteil, vorzugsweise einem Separator statt. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können.¹ Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

Die Wärmebehandlung der Milch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Milch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.
¹(http://www.westfalia-separator.com/de/anwendungen/molkereitechnik/milch-molke.html).

### HERSTELLUNG VON MILCHERZEUGNISSEN

### Joghurt

Joghurt besteht vereinfacht aus Milch, Milchsäure und auch Bakterien. Die Milch kann von Kühen, aber auch von anderen Milch gebenden Tieren, wie beispielsweise Schafe, Ziegen, Pferde und Kamele gewonnen werden.

Bevorzugt wird Standardmilch oder Magermilch (wie oben beschrieben) zur weiteren Her-stellung des Joghurts verwendet werden. Der Milch werden Bakterienkulturen zugesetzt. Die Bakterienkulturen bauen den Milchzucker Laktose zu Milchsäure ab, wodurch das Milchei-weiß gerinnt. Diese sogenannte Fermentation führt nicht nur zur mehr oder weniger festen Konsistenz sowie dem Joghurt-typischen Geruch und Geschmack, sondern auch zu einer deutlich längeren Haltbarkeit. Bei der modernen Herstellung kommt im Unterschied zu frü-her stets wärmebehandelte Milch mit eingestelltem Fettgehalt zum Einsatz. Indem die Her-steller außerdem die Art und Zusammensetzung der eingesetzten Milchsäurekulturen nicht einfach dem Zufall überlassen, nehmen sie schon im Vorfeld gezielt Einfluss auf die Struktur und das Aroma. Vorzugsweise werden thermophile Bakterienkulturen eingesetzt, die eine Temperatur von ca. 38 bis 42 Grad bevorzugen und welche überwiegend ausgewählt sind aus Spezies Streptococcus thermophilus und Lacotobacillus (delbrueckii subsp. bulgaricus), Bifidobacteri-um bifidum für milde Joghurtsorten mit einem geringeren Milchsäuregehalt. Ebenfalls im Hinblick auf gute Konsistenz werden sehr oft noch Magermilchpulver zugesetzt oder durch Eindampfen den Wassergehalt d er Ausgangsmilch reduziert. Die generell erforderliche Erhitzung der Milch dient ebenfalls nicht nur dem Schutz vor schädlichen Mikroorganismen, sondern gleichfalls dem Aufbau der Joghurtgels.

Es kann zwischen stichfesten oder gerührten Joghurt unterschieden werden. Für gerührten oder sämigen Joghurt wird die Milch nach Zugabe der Joghurtkulturen mehrere Stunden in großen Stahltanks fermentiert. Am besten arbeiten thermophile Bakterien im Temperaturbereich von 38 bis 42 °C. Durch die sich bildende Milchsäure gerinnen die Caseine (bestimmte Fraktionen des Milcheiweißes) langsam zu einem gallertartigen Netzwerk, in das die flüssige Molke eingeschlossen ist. Sobald ein bestimmter pH-Wert (Säurewert) erreicht ist, wird der Joghurt glattgerührt, auf Kühlschranktemperatur abgekühlt, abgefüllt und sofort verschlossen. Da die Viskosität nach dem Verpacken zunimmt, kann das verkaufsfertige Produkt ähnlich wie stichfester Joghurt aussehen. Diese zweite Variante wird jedoch so hergestellt, dass die Milch-Kulturenmischung gleich in Joghurtbecher abgefüllt wird, d.h. der Fermentationsprozess findet noch vor der Kühlung statt. Während die Mischung im Becher gerinnt, darf wieder keine Bewegung die Gallertbildung stören. Auch bei stichfestem Joghurt stoppt dann nach Erreichen des gewünschten pH-Wertes ein rasches Abkühlen die Fermentation. Zum Schluss kommen die Becher in eine Kältekammer, wo der Joghurt dann endgültig fest wird.

### Dickmilch

Dickmilch, Sauermilch, Setzmilch oder Stockmilch ist ein aus Kuhmilch gewonnenes Milchprodukt. Es entsteht heute vor allem aus pasteurisierter - früher aus ungekochter - und homogenisierter Kuhmilch durch bakterielle Milchsäurebildung aus dem Milchzucker. Die Folge ist das Ausflocken des Caseins, was die Milch dann "dick" macht. Im Unterschied zu Joghurt (thermophile Kulturen, Temperaturoptimum 42-45 °C) werden bei der Herstellung von Dickmilch mesophile (Temperaturoptimum 22-28 °C) Kulturen beigefügt.

### Crème fraiche

Creme fraiche wird aus Sahne hergestellt, der Milchsäurebakterien zugesetzt werden. Die Milchsäurebakterien setzen dabei vorzugsweise bei einer Temperatur von 20 bis 40 °C den Milchzucker in Milchsäure um. Dadurch erhält die Creme fraiche ihren besonderen Geschmack und ihre Konsistenz. Vorzugsweise weist Creme fraiche einen Fettgehalt von ca. 30% auf.

### Saure Sahne

Saure Sahne oder Sauerrahm (creme aigre, auch creme acidulée) ist Sahne, die mit Milchsäurebakterien versetzt wurde, wodurch sie neben einem leicht säuerlichen Geschmack eine festere, cremige Konsistenz annimmt. Gehandelt wird saure Sahne in verschiedenen Varianten unter diesen Namen:
- Saure Sahne, Sauerrahm enthält mindestens 10 % Fett.
- Creme legere ist eine fettärmere Variante der Creme fraiche mit einem Fettgehalt von meist um die 20 %.
- Schmand ist eine fetthaltigere saure Sahne mit einem Fettgehalt von meist 20-29 %. Ein Zusatz von Bindemitteln (meist Stärke) ist erlaubt.
- Creme fraiche (creme fraiche epaisse) enthält mindestens 30 % Fett, ein Zusatz von bis zu 15 % Saccharose ist erlaubt. Creme fraiche darf nach der Fermentation nicht mehr wärmebehandelt werden.

### Schmand

Schmand wird durch Fermentation von Sahne nach Zugabe verschiedener mesophiler Milchsäurebakterien (*Lactococcus lactis, Lactococcus lactis subsp. cremoris, Ln. cremoris und Lc. diacethylactis*) -Kulturen hergestellt. Die Bakterien erzeugen dabei Milchsäure, die wiederum die Sahne sauer macht und gleichzeitig verdickt. Schmand enthält vorzugsweise 20 - 29% Fett.

### Kefir (Kefir mild)

Industriell hergestellter und im Handel angebotener Kefir entspricht üblicherweise *nicht* dem traditionell mit Kefirknollen hergestellten Getränk und hat die Bezeichnung "Kefir, mild". Damit das entstehende Getränk immer den gleichen Geschmack besitzt, wird industriell mit einer definierten Mischung verschiedener Bakterien und Hefen gearbeitet, die die komplexe Zusammensetzung des Mikroorganismen-Konsortiums von Kefirkörnern nicht vollständig nachahmen können.

### HERSTELLUNG DER SAUERMOLKEBASIS

Das hergestellte Milcherzeugnis (Joghurt, saure Sahne, Sauerrahm, Creme Fraiche, Schmand, Kefir, Dickmilch) wird mit Sauermolke verrührt. Vorzugsweise ist das Milcherzeugnis Joghurt und stammt vorzugsweise aus Magermilch oder standardisierte Milch. Zu diesem Gemisch können nun die weiteren Inhaltsstoffe, wie vorzugsweise Pektin, WPC, Buttermilchpulver, Zucker und Eigelb (-pulver/-fraktion) zugesetzt wer-den. Anschließend wird erhitzt, wobei die Temperatur vorzugsweise bei 80 bis 150°C liegt, besonders bevorzugt bei 85 bis 100°C, und ganz besonders bei 90 bis 95 °C (±3°C) liegt. Im Folgenden wird die Masse unter Druck homogenisiert, wobei die Temperatur vorzugsweise gehalten wird und der Druck von 100 bis 350 bar liegt, vorzugsweise von 200 bis 300 bar und besonders bevorzugt von 250 bis 280 bar. Anschließend wird auf 4 °C abgekühlt.

Die so erhaltene Sauermolkebasis stellt ein Halbfertigprodukt dar, das in wenigen Schritten zum Endprodukt formuliert werden kann. Beispielsweise können der Sauermolkebasis weitere Aromastoffe hinzugefügt werden, um eine bestimmte Geschmacksrichtung zu erreichen oder Prebiotische Zusätze, um den Gehalt an ernährungsphysiologischen Stoffen weiter zu erhöhen.

Im Weiteren werden die zusätzlichen Inhaltsstoffe, die sowohl während der Herstellung der Sauermolkebasis hinzugefügt werden können, als auch zur Vervollständigung des Endpro-duktes (Dressing, Creme, Soße und/ oder essbare Emulsion und/oder essbare Schäume) dem Halbfertigprodukt hinzugefügt werden kann.

### NAHRUNGSMITTELZUSATZSTOFFE

Die Nahrungsmittel können weitere Inhaltsstoffe aufweisen, wie z.B. Süßstoffe, Lebensmittelsäuren, Säureregulatoren, Verdickungsmittel und insbesondere Aromastoffe.

### Süßstoffe

Als Süßstoffe oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (Beta vulgaris ssp., Zuckerfraktionen, Zuckersirup, Melasse), Zuckerrohr (Saccharum officinarum ssp., Melasse, Zuckerrohrsirup), Ahornsirup (Acer ssp.) oder Agaven (Agavendicksaft).

### In Betracht kommen auch

synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Erythritol, Threitol, Arabitol, Ribotol, Xylitol, Sorbitol, Mannitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin);
- Süß schmeckende Aminosäuren (z.B. Glycin, D-Leucin, D-Threonin, D-Asparagin, D-Phenylalanin, D-tryptophn, L-Prolin);
- Weitere süß schmeckende niedermolekulare Substanzen, wie z.B. Hernandulcin, Dihydrochalconglykoside, Glycyrrhizin, Glycerrhetinsäure, ihre Derivate und Salze, Extrakte von Lakritz (Glycyrrhizza glabra ssp.), Lippia dulcis Extrakte, Momordica ssp. Extrakte oder
- Einzelsubstanzen wie z.B. Momordica grosvenori [Luo Han Guo] und die daraus gewonnenen Mogroside, Hydrangea dulcis oder Stevia ssp. (z.B. Stevia rebaudiana) Extrakte.

### Säureregulatoren

Die Nahrungsmittel können Carbonsäuren enthalten. Säuren im Sinne der Erfindung sind bevorzugt in Lebensmitteln zulässige Säuren, insbesondere die hier genannten:
- E 260: - Essigsäure
- E 270: - Milchsäure
- E 290: - Kohlendioxid
- E 296: - Apfelsäure
- E 297: - Fumarsäure
- E 330: - Citronensäure
- E 331: - Natriumcitrat
- E 332: - Kaliumcitrat
- E 333: - Calciumcitrat
- E 334: - Weinsäure
- E 335: - Natriumtartrat
- E 336: - Kaliumtartrat
- E 337: - Natrium-Kaliumtartrat
- E 338: - Phosphorsäure
- E 353: - Metaweinsäure
- E 354: - Calciumtartrat
- E 355: - Adipinsäure
- E 363: - Bernsteinsäure
- E 380: - Triammoniumcitrat
- E 513: - Schwefelsäure
- E 574: - Gluconsäure
- E 575: - Glucono-delta-Lacton

### Verdickungsmittel

Säureregulatoren sind Lebensmittelzusatzstoffe, die den Säuregrad oder die Basizität und damit den gewünschten pH-Wert eines Lebensmittels konstant halten. Es handelt sich meist um organische Säuren und deren Salze, Carbonate, seltener auch um anorganische Säuren und deren Salze. Der Zusatz eines Säureregulators verstärkt teils die Stabilität und Festigkeit des Lebensmittels, bewirkt eine erwünschte Ausfällung und verbessert die Wirkung von Konservierungsmitteln. Im Gegensatz zu Säuerungsmitteln werden sie nicht zur Geschmacksveränderung von Lebensmitteln benutzt. Ihre Wirkung beruht auf der Bildung eines Puffersystems im Lebensmittel, bei dem sich auf Zugabe von sauren oder basischen Stoffen der pH-Wert nicht oder nur geringfügig ändert. Beispiele sind:
- E 170: - Calciumcarbonat
- E 260-263: - Essigsäure und Acetate
- E 270: - Milchsäure
- E 296: - Äpfelsäure
- E 297: - Fumarsäure
- E 325-327: - Lactate (Milchsäure)
- E 330-333: - Citronensäure und Citrate
- E 334-337: - Weinsäure und Tartrate
- E 339-341: - Orthophosphate
- E 350-352: - Malate (Äpfelsäure)
- E 450-452: - Di-, Tri- und Polyphosphate
- E 500-504: - Carbonate (Kohlensäure)
- E 507: - Salzsäure und ChlorideE 513-517Schwefelsäure und Sulfate
- E 524-528: - Hydroxide
- E 529-530: - Oxide
- E 355-357: - Adipinsäure und Adipate
- E 574-578: - Gluconsäure und Gluconate

### Verdickungsmittel

Verdickungsmittel sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder Ionenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können. Beispiele sind:
- E 400: - Alginsäure
- E 401: - Natriumalginat
- E 402: - Kaliumalginat
- E 403: - Ammoniumalginat
- E 404: - Calciumalginat
- E 405: - Propylenglycolalginat
- E 406: - Agar Agar
- E 407: - Carrgeen, Furcelleran
- E 407: - Johannisbrotkernmehl
- E 412: - Guarkernmehl
- E 413: - Traganth
- E 414: - Gummi arabicum
- E 415: - Xanthan
- E 416: - Karaya (Indischer Traganth)
- E 417: - Tarakernmehl (Peruanisches Johannisbrotkernmehl)
- E 418: - Gellan
- E 440: - Pektin, Opekta
- E 440ii: - Amidiertes Pektin
- E 460: - Mikrokristalline Cellulose, Cellulosepulver
- E 461: - Methylcellulose
- E 462: - Ethylcellulose
- E 463: - Hydroxypropylcellulose
- E 465: - Methylethylcellulose
- E 466: - Carboxymethylcellulose, Natriumcarboxymethylcellulose

### Aromastoffe

Die Erfindung erlaubt insbesondere auch den Einsatz von Aromastoffen mit Ester-, Aldehyd- oder Lactonstruktur, die in Gegenwart von Titandioxid und unter Lichteinfluss besonders schnell abgebaut werden. Die Erfindung sorgt somit auch für eine verbesserte Stabilität, speziell Lagerstabilität der Aromastoffe.

Die erfindungsgemäßen oralen Zubereitungen können einen oder mehrere Aromastoffe enthalten. Typische Beispiele umfassen: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

### Vitamine

In einer weiteren Ausführungsform der vorliegenden Erfindung können die Nahrungsmittelzusatzstoffe als weitere fakultative Gruppe von Zusatzstoffen Vitamine enthalten. Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllochinon, Menachinon).
Die bevorzugten Vitamine sind neben der Ascorbinsäure die Gruppe der Tocopherole.

### Prebiotische Stoffe

In einer weiteren Ausgestaltung der Erfindung können die Zubereitungen des Weiteren Prebiotische Stoffe ("Prebiotics") enthalten, die die Gruppe H bilden. Prebiotics werden als unverdauliche Nahrungsbestandteile definiert, deren Verabreichung das Wachstum oder die Aktivität einer Reihe nützlicher Bakterien im Dickdarm stimuliert. Die Zugabe von prebiotischen Verbindungen verbessert die Stabilität der Anthocyanine gegenüber Abbauprozessen im Darmtrakt. Im Folgenden werden verschiedene Stoffe, insbesondere Kohlenhydrate, die als Prebiotics im Sinne der Erfindung besonders bevorzugt sind.

**Fructooligosaccharide.** Fructooligosaccharide oder abgekürzt FOS umfassen insbesondere kurzkettige Vertreter mit 3 bis 5 Kohlenstoffatomen, wie beispielsweise D-Fructose und D-Glucose. FOS, auch als Neozucker bezeichnet, werden kommerziell auf Basis von Saccharose und dem aus Pilzen gewonnenen Enzym Fructosyltransferase hergestellt. FOS unterstützen insbesondere das Wachstum von Bifidobakterien im Darm und werden vor allem in den USA zusammen mit probiotischen Bakterien in verschiedenen funktionalisierten Lebensmitteln vermarktet.

**Inuline.** Inuline zählen zu einer Gruppe von natürlich vorkommenden Fructose enthaltenden Oligosachhariden. Sie gehören zu einer Klasse von Kohlenhydraten, die als Fructane bezeichnet werden. Ihre Gewinnung erfolgt aus den Wurzeln der Chicoree-Pflanze (Cichorium intybus) oder so genannten Jerusalem-Artischocken. Inuline bestehen überwiegend aus Fructoseeinheiten und weisen typisch eine Glucoseeinheit als Endgruppe auf. Die Fructoseeinheiten sind dabei miteinander über eine beta-(2-1)glykosidische Bindung verknüpft. Der mittlere Polymerisationsgrad von Inulinen, die als Prebiotics im nahrungsmittelbereich Anwendung finden, liegt bei 10 bis 12. Inuline stimulieren ebenfalls das Wachstum von Bifidobakterien im Dickdarm.

**Isomaltooligosaccharide.** Bei dieser Gruppe handelt es sich um eine Mischung von alpha-D-verknüpften Glucoseoligomeren, einschließlich Isomaltose, Panose, isomaltotetraose, Isomaltopentaose, Nigerose, Kojibiose, Isopanose und höherer verzweigter Oligosaccharide. Isomaltooligosaccharide werden über verschiedene enzymatische Wege hergestellt. Sie stimulieren ebenfalls das Wachstum von Bifidobakterien und Lactobacillen im Dickdarm. Isomaltooligosaccharide werden speziell in Japan als Nahrungsmittelzusatzstoffe in funktionalisierten Lebensmitteln eingesetzt. Inzwischen finden sie auch in den USA Verbreitung.

**Lactilol.** Lactilol ist das Disaccharid der Lactulose. Seine medizinische Anwendung findet gegen Verstopfung und bei häpatischer Enzephalopathie. In Japan wird Lactilol als prebiotic eingesetzt. Es widersteht dem Abbau im oberen Verdauungstrakt, wird aber durch verschiedene Darmbakterien fermentiert, was zu einem Anstieg der Biomasse an Bifidobakterien und Lactobacillen im Darm führt. Lactilol ist auch unter der chemischen Bezeichnung 4-0-(beta-D-galactopyranosyl)-D-glucitol bekannt. Der medizinsche Anwendungsbereich von Lactilol in den USA ist wegen fehlender Studien beschränkt; in Europa wird es vorzugsweise als Süßstoff eingesetzt.

**Lactosucrose.** Lactosucrose ist ein Trisaccharid, das sich aus D-Galactose, D-Glucose und D-Fructose aufbaut. Lactosucrose wird durch enzymatischen Transfer des Galactosylrestes in der Lactose auf die Sucrose hergestellt. Es wird weder im Magen noch im oberen Teil des Darmtraktes abgebaut und wird ausschließlich von Bifidobakterien zu Wachstum konsumiert. Unter physiologischen Gesichtspunkten wirkt Lactosucrose als Stimulator für das Wachstum der Darmflora. Lactosucrose ist ebenfalls bekannt als 4G-beta-D-galactosucrose. Es ist in Japan als Nahrungsmittelzusatzstoff und als Bestandteil von funktionalisierten lebensmittel weit verbreitet, insbesondere auch als Zusatzstoff für Joghurts. Lactosucrose wird derzeit auch in den USA für einen ähnlichen Anwendungszweck getestet.

**Lactulose.** Lactulose ist ein halbsynthetisches Disaccharid aus D-Lactose und D-Fructose. Die Zucker sind über eine beta-glykosidische Bindung verknüpft, was sie resistent gegen Hydrolyse durch Verdauungsenzyme macht. Stattdessen wird Lactulose durch eine beschränkte Anzahl von Darmbakterien fermentiert, was zu einem Wachstum insbesondere von Lactobacillen und Bifidobakterien führt. Lactulose stellt in den USA ein verschreibungspflichtiges Medikament gegen Verstopfung und hepatische Enzephalopathie dar. In Japan hingegen wird es als Nahrungsmittelzusatzstoff und Bestandteil von funktionalisierten Lebensmitteln frei verkauft.

**Pyrodextrine.** Pyrodextrine umfassen eine Mischung von glucoseenthaltenden Oligosacchariden, die bei der Hydrolyse von Stärke gebildet werden. Pyrodextrine fördern die Proliferation von Bifidobakterien im Dickdarm. Auch sie werden im oberen Darmbereich nicht abgebaut.

**Sojaoligosaccharide.** Bei dieser Gruppe handelt es sich um Oligosaccharide, die im Wesentlichen nur in Sojabohnen und darüber noch in anderen Bohnen sowie Erbsen zu finden sind. Die beiden maßgeblichen Vertreter sind das Trisaccharid Raffinose und das Tetrasaccharid Stachyose. Raffinose setzt sich aus jeweils einem Molekül D-Galactose, D-Glucose und D-Fructose zusammen. Stachyose besteht aus zwei Molekülen D-Galactose sowie jeweils einem Molekül D-Glucose und D-Fructose. Sojaoligosacccharide stimulieren das Wachstum von Bifidobakterien im Dickdarm und werden in Japan bereits als Nahrungsmittelzusatzstoffe sowie in funktionalisierten Lebensmitteln eingesetzt. In den USA werden sie für diese Anwendung derzeit getestet.

**Transgalactooligosaccharide.** Transgalactooligosaccharide (TOS) stellen Mischungen von Oligosacchariden auf Basis D-Glucose und D-Galactose dar. TOS werden ausgehend von D-Lactose mit Hilfe des Enzyms Betaglucosidase aus Aspergillus oryzae hergestellt. Wie viele andere Prebiotics sind auch TOS im Dünndarm stabil und stimulieren das Wachstum von Bifidobakterien im Dickdarm. TOS werden sowohl bereits in Europa als auch in Japan als Nahrungsmittelzusatzstoffe vermarktet.

**Xylooligosaccharide.** Xylooligosaccharide enthalten beta-1,4-verknüpfte Xyloseeinheiten. Der Polymerisationsgrad der Xylooligosaccharide liegt zwischen 2 und 4. Sie werden durch enzymatische Hydrolyse des Polysaccharids Xylan erhalten. Sie werden bereits in Japan als Nahrungsmittelzusatzstoffe vermarktet, in den USA befinden sie sich noch in der Testphase.

**Biopolymere.** Geeignete Biopolymere, die ebenfalls als Prebiotics in Betracht kommen, wie beispielsweise Beta-Glucane, zeichnen sich dadurch aus, dass sie auf pflanzlicher Basis hergestellt werden, beispielsweise kommen als Rohstoffquellen Cerealien wie Hafer und Gerste, aber auch Pilze, Hefen und Bakterien in Frage. Außerdem geeignet sind mikrobiell hergestellte Zellwandsuspensionen oder ganze Zellen mit hohem Beta-Glucan Gehalt. Restliche Anteile an Monomeren weisen 1-3 und 1-4 oder 1-3 und 1-6 Verknüpfungen auf, wobei der Gehalt stark variieren kann. Vorzugsweise werden Beta-Glucane auf Basis von Hefen, insbesondere Saccharomyces, speziell Saccharomyces cerevisiae, erhalten. Andere geeignete Biopolymere sind Chitin und Chitinderivate, insbesondere Oligoglucosamin und Chitosan, das ein typisches Hydrokolloid darstellt.

**Galactooligosaccharide (GOS).** Galacto-Oligosaccharide werden durch die enzymatische Umwandlung von Lactose, einer Komponente von Rindermilch, erzeugt. GOS umfassen im Allgemeinen eine Kette von Galactose-Einheiten, die durch aufeinanderfolgende Transgalactosylierung-Reaktionen gebildet werden, und die eine terminale Glucoseeinheit aufweisen. Terminale Glucoseeinheiten werden zumeist durch eine frühzeitige Hydrolyse von GOS gebildet. Der Polymerisationsgrad der GOS kann ziemlich stark schwanken und reicht von 2 bis 8 Monomereinheiten. Eine Reihe von Faktoren bestimmt dabei den Aufbau und die Reihenfolge Monomereinheiten: die Enzym-Quelle, das Ausgangsmaterial (Lactose-Konzentration und Ursprung der Lactose), die am Prozess beteiligten Enzyme, Bedingungen bei der Verarbeitung und die Zusammensetzung des Mediums.

### Probiotische Mikroorganismen

Probiotische Mikroorganismen, auch als "Probiotics" bezeichnet, die die Gruppe (N) bilden, stellen lebende Mikroorganismen dar, die für den Wirt nützliche Eigenschaften besitzen. Gemäß der Definition der FAO/WHO handelt es sich um "lebende Mikroorganismen, die bei angemessener Dosierung dem Wirt einen Gesundheitsvorteil vermitteln". Milchsäurebakterien (LAB) und Bifidobakterien stellen die bekanntesten Probiotics dar; es können aber auch verschiedene Hefen und Bazillen Verwendung finden. Probiotics werden üblicherweise als Bestandteil von fermentierten Nahrungsmitteln aufgenommen, denen man spezielle Lebendkulturen zugesetzt hat, wie z.B. Joghurt, Sojajoghurt oder andere probiotische Nahrungsmittel. Darüber hinaus sind auch Tabletten, kapseln, Pulver und Sachets erhältlich, die die Mikroorganismen in gefriergetrockneter Form enthalten. Tabelle B gibt einen Überblick über handelsübliche Probiotics und den zugehörigen Auslobungen zur Gesundheit, die im Sinne der vorliegenden Erfindung als Komponente (b1) eingesetzt werden können.

**Tabelle A:**

| Probiotische Stoffe | | | |
|---|---|---|---|
| **Stamm** | **Bezeichnung** | **Hersteller** | **Auslobung** |
| *Bacillus coagulans* GBI-30, 6086 | GanedenBC | Ganeden Biotech | Steigert die Immunantwort bei viraler Infektion |
| *Bifidobacterium animalis* subsp. *lactis* BB-12 | Probio-Tec Bifidobacterium BB-12 | Chr. Hansen | Klinische Studien am Menschen haben gezeigt, dass BB-12 alleine oder in Kombination das gastrotestinale System positiv beeinflusst. |
| *Bifidobacterium infantis* 35624 | Align | Procter & Gamble | In einer vorläufigen Studie wurde gezeigt, dass das Bakterium abdominale Schmerzen verringern kann. |
| *Lactobacillus acidophilus* NCFM | | Danisco | Aus einer Studie geht hervor, dass die Nebeneffekte von antibiotischen Behandlungen verringert werden |
| *Lactobacillus paracasei* St11 (or NCC2461) | | | |
| *Lactobacillus johnsonii* La1 (= Lactobacillus LC1, *Lactobacillus johnsonii* NCC533) | | Nestlé | Verringert Gastritisbeschwerden und vemindert Entzündungen |
| *Lactobacillus plantarum* 299v | GoodBelly/ Pro-Viva/ProbiMage | Probi | Könnte IBS Symptome verbessern; jedoch noch mehr Studien erforderlich. |
| *Lactobacillus reuteri* American Type Culture Collection\|ATTC 55730 (*Lactobacillus reuteri* SD2112) | | BioGaia | Erste Anzeichen für eine Wirksamkeit gegen Gangivitis, Fieber bei Kindern und Verminderung der Krankheitstage bei Erwachsenen. |
| *Lactobacillus reuteri* Protectis (DSM 17938, daughter strain of ATCC 55730) | | | |
| *Lactobacillus reuteri* Protectis (DSM 17938, daughter strain of ATCC 55730) | | | |
| *Saccharomyces boulardii* | DiarSafe and others | Wren Laboratories | Beschränkter Nachweis bei der Behandlung von akuten Durchfallerkrankungen. |
| *Lactobacillus rhamnosus* GR-1 & *Lactobacillus reuteri* RC-14 | Bion Flore Intime/ Jarrow Fem-Dophilus | Chr. Hansen | In einer Studie Nachweis der Wirksamkeit gegen Vaginitis. |
| *Lactobacillus acidophilus* NCFM *& Bifidobacterium bifidum* BB-12 | Florajen3 | American Lifeline, Inc | Erste Hinweise auf Wirksamkeit gegen CDAD |
| *Lactobacillus acidophilus* CL1285 *& Lactobacillus casei* LBC80R | Bio-K+ CL1285 | Bio-K+ International | Hinweise auf Verbesserung bei der Verdauung, speziell im Hinblick auf Lactoseintoleranz. |
| *Lactobacillus plantarum* HEAL 9 *& Lactobacillus paracasei* 8700:2 | Bravo Friscus/ ProbiFrisk | Probi | Derzeit laufen Untersuchungen zur Wirksamkeit gegen Erkältungs-erkrankungen. |

Im Folgenden werden zwei weiteren Formen von Milchsäurebakterien genannt, die ebenfalls als Probiotics eingesetzt werden können:
- *Lactobacillus bulgaricus;*
- *Streptococcus thermophilus;*
Auch spezielle fermentierte Produkte auf Basis solcher Milchsäurebakterien sind einsetzbar:
- Mixed Pickles
- Fermented bean paste such as tempeh, miso and doenjang;
- Kefir;
- Buttermilch
- Kimchi;
- Pao cai;
- Sojasoße;
- Zha cai.

### Geschmacksverstärker

Diese Zubereitungen- wie auch die Aromamischungen- können des Weiteren zusätzliche Aromastoffe zum Verstärken eines salzigen, gegebenenfalls leicht sauren und/oder Umami-Geschmackseindrucks enthalten. Es werden somit die erfindungsgemäßen Produkte bzw. Aromamischungen in Kombination mit zumindest einer weiteren zur Verstärkung eines an-genehmen Geschmackseindrucks (salzig, Umami, gegebenenfalls leicht sauer) geeigneten Substanz verwendet. Hierbei bevorzugt sind salzig schmeckende Verbindungen und salzverstärkende Verbindungen. Bevorzugte Verbindungen sind in der WO 2007/045566 offenbart. Ferner bevorzugt sind Umami-Verbindungen wie in der WO 2008/046895 und EP 1 989 944 beschrieben sind.

Weiterhin können erfindungsgemäß bevorzugte Aromamischungen und Produkte auch Aromastoffe zur Maskierung von bitteren und/oder adstringierenden Geschmackseindrücken umfassen (Geschmackskorrigentien). Die (weiteren) Geschmackskorrigenzien werden z. B. aus der folgenden Liste ausgewählt: Nucleotide (z.B. Adenosin-5'-monophosphat, Cytidin-5'-monophosphat) oder deren pharmazeutisch akzeptable Salze, Lactisole, Natriumsalze (z.B. Natriumchlorid, Natriumlactat, Natriumcitrat, Natriumacetat, Natriumgluconoat), weitere Hydroxyflavanone (z.B. Eriodictyol, Homoeriodictyol oder deren Natriumsalze), insbesondere gemäß US 2002/0188019, Hydroxybenzoesäureamide nach DE 10 2004 041 496 (z.B. 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-N-(4-hydroxy-3-methoxybenzyl)amid, 2-Hydroxy-benzoesäure-N-4-(hydroxy-3-methoxybenzyl)amid, 4-Hydroxybenzoesäure-N-(4-hydroxy-3-methoxybenzyl)amid, 2,4-Dihydroxybenzoesäure-N-(4-hydroxy-3-methoxybenzyl)amid-Mono-natriumsalz, 2,4-Dihydroxybenzoesäure-N-2-(4-hydroxy-3-methoxyphenyl)-ethylamid, 2,4-Dihydroxybenzoesäure-N-(4-hydroxy-3-ethoxybenzyl)amid, 2,4-Dihydroxybenzoesäure-N-(3,4-dihydroxybenzyl)amid und 2-Hydroxy-5-methoxy-N-[2-(4-hydroxy-3-methoxyphenyl)ethyl]amid (Aduncamid), 4-Hydroxybenzoesäurevanillylamid), bittermaskierende Hydroxydeoxybenzoine z.B. gemäß WO 2006/106023 (z.B. 2-(4-Hydroxy-3-methoxyphenyl)-1-(2,4,6-tri¬hydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxy-phenyl)ethanon), Aminosäuren (z.B. gamma-Aminobuttersäure nach WO 2005/096841 zur Verminderung oder Maskierung eines unangenehmen Geschmackseindrucks wie Bitterkeit), Äpfelsäureglycoside nach WO 2006/003107, salzig schmeckende Mischungen gemäß PCT/EP 2006/067120 Diacetyltrimere gemäß WO 2006/058893, Gemische von Molkeproteinen mit Lecithinen und/oder bittermaskierende Substanzen wie Gingerdione gemäß WO 2007/003527.

Bevorzugte Aromastoffe sind solche, die einen süßen Geruchseindruck verursachen, wobei der oder die weiteren Aromastoffe, die einen süßen Geruchseindruck verursachen, bevor-zugt ausgewählt sind aus der Gruppe bestehend aus:
Vanillin, Ethylvanillin, Ethylvanillinisobutyrat (= 3 Ethoxy-4-isobutyryloxybenzaldehyd), Furaneol (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalac-ton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäurei-soamylester, 3-Methyl-buttersäureethylester, n-Hexansäureethylester, n-Hexansäure-allylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al, 4-Hydroxyzimtsäure, 4-Methoxy-3-hydroxyzimtsäure, 3-Methoxy-4-hydroxyzimtsäure, 2-Hydroxyzimtsäure, 2,4-Dihydroxybenzoesäure, 3-Hydroxybenzoesäure, 3,4-Dihydroxybenzoesäure, Vanillinsäure, Homovanillinsäure, Vanillomandelsäure und Phenylacetaldehyd.

### Wirkstoffe zur Maskierung von unangenehmen Geschmackseindrücken

Weiterhin können die oralen Zubereitungen auch weitere Stoffe umfassen, die ebenfalls zur Maskierung von bitteren und/oder adstringierenden Geschmackseindrücken dienen. Diese weiteren Geschmackskorrigenzien werden z. B. aus der folgenden Liste ausgewählt: Nucleotiden (z.B. Adenosin-5'-monophosphat, Cytidin-5'-monophosphat) oder deren physiologisch akzeptablen Salzen, Lactisolen, Natriumsalzen (z.B. Natriumchlorid, Natriumlactat, Natriumcitrat, Natriumacetat, Natriumgluconoat), Hydroxyflavanonen, dabei bevorzugt Eriodictyol, Sterubin (Eriodictyol-7-methylether), Homoeriodictyol, und deren Natrium-, Kalium-, Calcium-, Magnesium- oder Zinksalzen (insbesondere solche wie beschrieben in EP 1258200 A2, die bezüglich der darin offenbarten entsprechenden Verbindungen auf dem Wege der Verweisung Bestandteil dieser Anmeldung wird), Hydroxybenzoesäureamiden, dabei vorzugsweise 2,4-Dihydroxybenzoesäurevanillylamid, 2,4-Dihydroxybenzoesäure-*N*-(4-hydroxy-3-methoxybenzyl)amid, 2,4,6-Trihydroxybenzoesäure-*N*-(4-hydroxy-3-methoxybenzyl)amid, 2-Hydroxy-benzoesäure-*N*-4-(hydroxy-3-methoxybenzyl)amid, 4-Hydroxybenzoesäure-*N*-(4-hydroxy-3-methoxybenzyl)amid, 2,4-Dihydroxybenzoesäure-*N*-(4-hydroxy-3-methoxy-benzyl)amid-Mono-natriumsalz, 2,4-Dihydroxybenzoesäure-*N*-2-(4-hydroxy-3-methoxy-phenyl)ethylamid, 2,4-Dihydroxybenzoesäure-*N*-(4-hydroxy-3-ethoxybenzyl)amid, 2,4-Dihydroxybenzoesäure-*N*-(3,4-dihydroxybenzyl)amid und 2-Hydroxy-5-methoxy-N-[2-(4-hydroxy-3-methoxyphenyl)ethyl]amid; 4-Hydroxybenzoesäurevanillylamiden (insbesondere solche wie beschrieben in WO 2006/024587, die bezüglich der darin offenbarten entsprechenden Verbindungen auf dem Wege der Verweisung Bestandteil dieser Anmeldung wird); Hydroxydeoxybenzoinen, dabei vorzugsweise 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)-ethanon und 1-(2-Hydroxy-4-methoxyphenyl)-2-(4-hydroxy-3-methoxyphenyl)ethanon) (insbesondere solche wie beschrieben in WO 2006/106023 beschrieben, die bezüglich der darin offenbarten entsprechenden Verbindungen auf dem Wege der Verweisung Bestandteil dieser Anmeldung wird); Hydroxyphenylalkandionen, wie zum Beispiel Gingerdion-[2], Gingerdion-[3], Gingerdion-[4], Dehydrogingerdion-[2], Dehydrogingerdion-[3], Dehydrogingerdion-[4]) (insbesondere solche wie beschrieben in WO 2007/003527, die bezüglich der darin offenbarten entsprechenden Verbindungen auf dem Wege der Verweisung Bestandteil dieser Anmeldung wird); Diacetyltrimeren (insbesondere solche wie beschrieben in WO 2006/058893, die bezüglich der darin offenbarten entsprechenden Verbindungen auf dem Wege der Verweisung Bestandteil dieser Anmeldung wird); gamma-Aminobuttersäuren (insbesondere solche wie beschrieben in WO 2005/096841, die bezüglich der darin offenbarten entsprechenden Verbindungen auf dem Wege der Verweisung Bestandteil dieser Anmeldung wird); Divanillinen (insbesondere solche wie beschrieben in WO 2004/078302, die bezüglich der darin offenbarten entsprechenden Verbindungen auf dem Wege der Verweisung Bestandteil dieser Anmeldung wird) und 4-Hydroxydihydrochalconen (vorzugsweise wie beschrieben in US 2008/0227867 A1, die bezüglich der darin offenbarten entsprechenden Verbindungen auf dem Wege der Verweisung Bestandteil dieser Anmeldung wird), dabei insbesondere Phloretin und Davidigenin, Aminosäuren oder Gemische von Molkeproteinen mit Lecithinen, Hesperetin wie in der WO 2007/014879 offenbart, die hinsichtlich dieser Verbindungen auf dem Wege der Verweisung Bestandteil dieser Anmeldung wird, 4-Hydroxydihydrochalkonen wie in der WO 2007/107596 offenbart, die hinsichtlich dieser Verbindungen auf dem Wege der Verweisung Bestandteil dieser Anmeldung wird, oder Propenylphenylglycosiden (Chavicolglycosiden) wie in EP 1955601 A1 beschrieben, die hinsichtlich dieser Verbindungen auf dem Wege der Verweisung Bestandteil dieser Anmeldung wird, oder Extrakten aus *Rubus suavissimus,* Extrakte aus *Hydrangea macrophylla* wie in EP 2298084 A1 beschrieben, Pellitorin und abgeleiteten Aromakompositionen wie in EP 2008530 A1 beschrieben, Umami-Verbindungen wie in WO 2008/046895 A1 und EP 1989944 A1 beschrieben, Umami-Verbindungen wie beschrieben in EP 2064959 A1 bzw. EP 2135516 A1, Vanillyllignanen, Enterodiol, sowie N-Decadienoylaminosäuren und deren Gemische.

### Antioxidantien

In der Lebensmittelindustrie werden sowohl natürliche als auch künstliche Antioxidationsmittel verwendet. Natürliche und künstliche Antioxidantien unterscheiden sich in erster Linie dadurch, dass erstere natürlich in der Nahrung vorkommen und letztere künstlich hergestellt werden. So werden natürliche Antioxidationsmittel, so sie als Lebensmittelzusatzstoff eingesetzt werden sollen, beispielsweise aus Pflanzenölen gewonnen. Vitamin E - auch als Tocopherol bekannt - wird beispielsweise häufig aus Sojaöl hergestellt. Synthetische Antioxidantien wie das Propylgallat, das Octylgallat und das Dodecylgallat werden dagegen durch chemische Synthese gewonnen. Die Gallate können bei empfindlichen Personen Allergien auslösen. Weitere einsetzbare Antioxidantien in Zusammensetzungen der vorliegenden Erfindung sind: Schwefeldioxid, E 220 Sulfite Natriumsulfit, E 221 Natriumhydrogensulfit, E 222 Natriumdisulfit, E 223 Kaliumdisulfit, E 224 Kalziumsulfit, E 226 Kalziumhydrogensulfit, E 227 Kaliumhydrogensulfit, E 228 Milchsäure, E 270 Ascorbinsäure, E 300 Natrium-L-Ascorbat, E 301 Calcium-L-Ascorbat, E 302 Ascorbinsäureester, E 304 Tocopherol, E 306 Alpha-Tocopherol, E 307 Gamma-Tocopherol, E 308 Delta-Tocopherol, E 309 Propy-Igallat, E 310 Octygallat, E 311 Dodecylgallat, E 312 Isoascorbinsäure, E 315 Natriumisoascorbat, E 316 tertiär-Butylhydrochinon (TBHQ), E 319 Butylhydroxianisol, E 320 Butylhydroxitoluol, E 321 Lecithin, E 322 Citronensäure, E 330 Salze der Zitronensäure (E 331 & E 332) Natriumzitrat, E 331 Kaliumzitrat, E 332 Calcium-Dinatrium-EDTA, E 385 Diphosphate, E 450 Dinatriumdiphosphat, E 450a Trinatriumdiphosphat, E 450b Tetranatriumdiphosphat, E 450c Dikaliumdiphosphat, E 450d Trekaliumdiphosphat, E 450e Dikalziumdiphosphat, E 450f Kalziumdihydrogendiphosphst, E 450g Triphosphate, E 451 Pentanatriumtriphosphat, E 451a Pentakaliumtriphosphat, E 451b Polyphosphat, E 452 Natriumpolyphosphat, E 452a Kaliumpolyphosphat, E 452b Natriumkalziumpolyphosphat, E 452c Kalziumpolyphosphat, E 452d Zinn-II-Chlorid, E 512.

### Emulgatoren

Emulgatoren zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen. Geeignete Emulgatoren, die in der lebensmittelverarbeitenden Industrie verwendet werden sind ausgewählt aus: Ascorbylpalmitat (E 304) Lezithin (E 322) Phosphorsäure (E 338) Natriumphosphat (E 339) Kaliumphosphat (E 340) Kalziumphosphat (E 341) Magnesiumorthophosphat (E 343) Propylenglykolalginat (E 405) Polyoxyethylen(8)stearat (E 430) Polyoxyethylenstearat (E 431) Ammoniumphosphatide (E 442) Natriumphosphat und Kaliumphosphat (E 450) Natriumsalze der Speisefettsäuren (E 470 a) Mono- und Diglyceride von Speisefettsäuren (E 471) Essigsäuremonoglyceride (E 472 a) Milchsäuremonoglyceride (E 472 b) Zitronensäuremonoglyceride (E 472 c) Weinsäuremonoglyceride (E 472 d) Diacetylweinsäuremonoglyceride (E 472 e) Zuckerester von Speisefettsäuren (E 473) Zuckerglyceride (E 474) Polyglyceride von Speisefettsäuren (E 475) Polyglycerin-Polyricinoleat (E 476) Propylenglykolester von Speisefettsäuren (E 477) Natriumstearoyllaktylat (E 481) Calciumstearoyl-2-lactylat (E 482) Stearyltartrat (E 483) Sorbitanmonostearat (E 491) Stearinsäure (E 570).

### Lebensmittelfarbstoffe

Lebensmittelfarbstoffe oder kurz Farbstoffe sind Lebensmittelzusatzstoffe zum Färben von Lebensmittel. Farbstoffe werden in die Gruppen der natürlichen Farbstoffe und synthetischen Farbstoffe unterteilt. Die naturidentischen Farbstoffe sind ebenfalls synthetischen Ursprungs. Die naturidentische Farbstoffe sind synthetische Nachbildungen von in der Natur vorkommenden, färbenden Substanzen. Geeignete Farbstoffe für den Einsatz in der vorliegenden Zusammensetzung sind ausgewählt aus: Kurkumin, E 100 Riboflavin, Lactoflavin, Laktoflavin, Vitamin B2, E 101 Tartrazin, E 102 Chinolingelb, E 104 Gelborange S, Gelborange RGL, E 110 Cochenille, Karminsäure, echtes Karmin, E 120 Azorubin, Carmoisin, E 122 Amaranth, E 123 Cochenillerot A, Ponceau 4 R, Victoriascharlach 4 R, E 124 Erythrosin, E 127 Allurarot AC, E 129 Patentblau V, E 131 Indigotin, Indigo-Karmin, E 132 Brillantblau FCF, Patentblau AE, Amidoblau AE, E 133 Chlorophylle, Chlorophylline, E 140 Kupferkomplexe der Chlorophylle, Kupfer-Chlorophyllin-Komple, E 141 Brillantsäuregrün, Grün S, E 142 Zuckerkulör, Zuckercouleur, E 150 a Sulfitlaugen-Zuckerkulör, E 150 b Ammoniak-Zuckerkulör, E 150 c Ammoniumsulfit-Zuckerkulör, E 150 d Brillantschwarz FCF, Brillantschwarz PN, Schwarz PN, E 151 Pflanzenkohle, E 153 Braun FK, E 154 Braun HT, E 155 Carotin, Karotin, E 160 a Annatto, Bixin, Norbixin, E 160 b Capsanthin, Capsorubin, E 160 c Lycopin, E 160 d Beta-apo-8'-Carotinal, Apocarotinal, Beta-Apocarotinal, E 160 e Beta-apo-8'-Carotinsäure-Ethylester (C30), Apocarotinester, Beta-Carotinsäureester, E 160 f Lutein, Xanthophyll, E 161 b Canthaxanthin, E 161 g Betanin, Betenrot, E 162 Anthocyane, E 163 Calciumcarbonat, E 170 Titandioxid, E 171 Eisenoxide, Eisenhydroxide, E 172 Aluminium, E 173 Silber, E 174 Gold, E 175 Litholrubin BK, Rubinpigment BK, E 180.

### GEWERBLICHE ANWENDBARKEIT

Ein weiterer Gegenstand der vorliegenden Patentanmeldung betrifft auf Sauermolke basierende Zusammensetzungen mit und ohne Eigelb. Die auf Sauermolke basierende Zusammensetzung stellt eine sogenannte Halbfertigware (bzw. -produkt) dar.

Die Sauermolkebasis ist besonders vorteilhaft, da sie sowohl mit Eigelb als auch ohne Eigelb formuliert werden kann. Insbesondere für eifreie Produkte, bevorzugt für Konsumenten die kein Eigelb vertragen, wird durch die Sauermolkebasis eine exzellente Ausweichmöglichkeit angeboten, Produkte auf dieser Basis zu erhalten, die gleichzeitig einen hohen ernährungsphysiologischen Wert aufweisen und trotzdem gut schmecken.

Die Verarbeitung von Eigelb in die Sauermolkebasis ist hier ebenfalls Gegenstand der Erfindung. Sauermolkebasis als Halbfertigware (bzw. -produkte) mit Eigelb weist nicht nur den hohen ernährungsphysiologischen Wert auf, die durch die Sauermolke bewirkt wird, sondern weist auch eine exzellente Stabilität und Textur auf.

Für die Hersteller ist die Sauermolkebasis daher, mit und ohne Eigelb, vorteilhaft, da sie stabil ist und bereits als Halbfertigware (bzw. -produkt) bereits eine breite Abdeckung aufzeigt, um viele Endprodukte daraus herstellen zu können.

### BEISPIELE

### Herstellung der Sauermolke basierten Zusammensetzung mit anschließender Verarbeitung zum Dressing

### a) Herstellung von Magermilchjoghurt

Magermilch (99,90%) mit einem Fettanteil von 0.1% wird angewärmt (55°C), homogenisiert, thermisiert (95 °C, Heißhaltung 3 Minuten) und auf 40 °C abgekühlt. Anschließend mit thermophilen Bakterienkulturen Streptococcus thermophilus und Lacotobacillus *(delbrueckii subsp. bulgaricus)* versetzt und bei ca. 40 °C fermentiert. Sobald ein bestimmter pH-Wert (Säurewert) erreicht ist, wird der Joghurt glattgerührt, auf Kühlschranktemperatur (< 8°C) abgekühlt, abgefüllt und sofort verschlossen.

### b) Herstellung der Sauermolkebasis

Der hergestellte Joghurt, wird mit Sauermolke verrührt. Zu diesem Gemisch werden nun ggf. Pektin, WPC, Buttermilchpulver, Zucker und Eigelb zugesetzt. Anschließend wird auf 90 bis 92°C erhitzt. Im Folgenden wird die Masse bei 250 bar homogenisiert und anschließend wird abgekühlt.

### c) Dressingherstellung

Sauermolke-Basiszusammensetzung aus b) und ggf. WPC werden in einer Emulgiermaschine (IKA Master Plant) bei 6000 U/min emulgiert. Es werden Öl und Stabilisatoren zugegeben und nach 60s Öl und Salz und Essig hinzugefügt. Die Sauermolkezusammensetzung mit dem Zusatz von Öl, Stabilisatoren, Salz und Essig wird für 600 s bei 6000 U/min emulgiert. Anschließend wird die emulgierte Zusammensetzung unter Rühren bei 75°C für 600 s thermisiert. Es wird dann abgefüllt und innerhalb von max. 60 Minuten auf Kühlhaustemperatur (< 8°C) gekühlt.

### Beispiel 1

### Sauermolke basierende Zusammensetzungen

Es wurden Sauermolke basierende Zusammensetzungen gemäß der obigen Herstellung a) bis b) hergestellt. Die Stabilität und der organoleptische Eindruck der hergestellten Sauermolke basierenden Zusammensetzungen wurden anschließend bewertet.

Die Bewertung der Stabilität wurde visuell vorgenommen, wobei darauf geachtet wurde, dass die Konsistenz der hergestellten Zusammensetzungen (mit geringer Abweichung) mit dem Standard übereinstimmen.

**Tabelle 2**

| Sauermolke basierte Zusammensetzungen (Mengenangaben als Gew.-%) | | | | | |
|---|---|---|---|---|---|
| **Mischung** | **Sauermolke** | **Joghurt** | **Pektin** | **Zucker** | **Eigelb** |
| A | 67 | 33 | 0.42 | - | - |
| B | 67 | 33 | 0.42 | 5.43 | - |
| C | 67 | 33 | 0.8 | 5.43 | - |
| D | 67 | 33 | 1.1 | 5.43 | - |
| E | 67 | 33 | 1.1 | 5.43 | 0.84 |
| F | 67 | 33 | 1.0 | 5.43 | - |

**Tabelle 3**

| Bewertung der Sauermolke basierende Zusammensetzungen | | |
|---|---|---|
| **Mischung** | **Stabilität** | **organoleptische Bewertung** |
| A | stabil | nicht ausreichend |
| B | weniger stabil | nicht ausreichend |
| C | einigermaßen stabil | gut |
| D | stabil | gut |
| E | stabil | ausreichend |
| F | stabil | gut |

Die Mischung E wurde weiterhin im Dressing (Herstellung gemäß c) getestet. Dabei zeigt sich ein gutes Emulgierverhalten. Allerdings benötigt das Dressing weitere Aromastoffe, um die Geschmacksnote zu verbessern.

Mischung F wurde ebenfalls im Dressing (Herstellung gemäß c) getestet. Das Dressing zeigte ebenfalls gutes Emlugierverhalten bei gleichzeitiger guter Geschmacksnote.

### Beispiel 2

### Emulgierverhalten von Sauermolke basierende Zusammensetzungen

Es wurden Sauermolke basierende Zusammensetzungen gemäß der obigen Herstellung a) bis b) hergestellt und die Stabilität nach der Partikelverteilung im Dressing beurteilt.

**Tabelle 4**

| Sauermolke basierte Zusammensetzungen (Mengenangaben als Gew.-%) | | | | | |
|---|---|---|---|---|---|
| **Mischung** | **Sauermolke** | **Joghurt** | **Pektin** | **Zucker** | **Eigelb** |
| G | 50 | 50 | 1.0 | 5.43 | |
| H | 50 | 50 | 1.0 | 5.43 | 0.84 |
| I | 67 | 33 | 1.0 | 5.43 | |
| J | 67 | 33 | 1.0 | 5.43 | 0.84 |
| K | 80 | 20 | 1.0 | 5.43 | |
| L | 80 | 20 | 1.0 | 5.43 | 0.84 |
| M | 100 | - | 1.0 | 5.43 | |
| N | 100 | - | 1.0 | 5.43 | 0.84 |

Die Sauermolke basierenden Zusammensetzungen G bis N weisen alle eine gute glatte Struktur auf und sind stabil.

Im Folgenden wurden die Sauermolke basierenden Zusammensetzungen G bis N zum Dressing mit der Basisrezeptur aus Tabelle 1 (gemäß Herstellung c)) verarbeitet. Die Stabilität der Dressings wurde mittels Partikelverteilungsmessungen (HELOS Partikelanalyse mit Laserbeugung, Sympatec GmbH) bestimmt. Hierbei wurde die Partikelverteilung wie folgt bestimmt: Die unverdünnte Probe wurde mittels des Laserbeugungssensor HELOS analysiert (Sympatec GmbH)

Die Stabilität wurde über die Partikelverteilung bestimmt, wobei eine Partikelverteilung von x(50%) (Mitte) ausgewertet und wie folgt bewertet wurde: Ein Wert:
unter 10 = sehr gut,
unter 20 = gut,
unter 30 = ausreichend,
ab 30 = nicht ausreichend (instabil)

Bei der Warmlagerung zeigen sich höhere Werte, was darauf hindeutet, dass die Struktur instabiler wird.

**Tabelle 5**

| Partikelverteilung von Sauermolke basierende Zusammensetzungen in Dressings | | |
|---|---|---|
| **Dressing** | **Kaltlagerung** | **Warmlagerung** |
| | **x (50 %) µm** | **x (50 %) µm** |
| Standard (Beispiel 1) | 15.0 | 14.5 |
| G' | 23.5 | 24.4 |
| H' | 7.0 | 6.6 |
| I' | 29.0 | 26.2 |
| J' | 6.6 | 7.0 |
| K' | 23.1 | 24.0 |
| L' | 6.1 | 6.2 |
| M' | 20.5 | 18.0 |
| N' | 5.7 | 5.7 |

Unabhängig von den unterschiedlichen Mischungsverhältnissen Sauermolke/ Joghurt wird die Emulsionsbildung durch Zugabe von Eigelb deutlich verbessert. Auch wenn kein Eigelb zusätzlich eingesetzt wird, kann mit den unterschiedlichen Mischungsverhältnissen Sauer-molke/Joghurt ein stabiles Dressing hergestellt werden. Die Partikelverteilung der eifreien und eihaltigen Dressings unterscheiden sich jedoch vom Standarddressing, dahingehend, dass die eihaltigen eine geringere und engere Partikelverteilung aufweisen, und die eifreien dagegen im Wert höher liegen, d.h. eine höhere Spannweite aufweisen

Die Dressings wiesen eine ausreichende Stabilität von bis zu 4 Wochen auf.

Die organoleptische Bewertungen liegen für die Dressings G' bis N' im Guten bis akzeptablen Rahmen. Mit weiteren Zusätzen könnten sie stets geschmacklich verfeinert werden und so eingestellt werden, wie es dem Verbraucher schmeckt.

### Beispiel 3

### Stabilität von Dressings mit und ohne Eigelb

Es wurde die Sauermolkebasis J aus Beispiel 2 verwendet und zum Dressing gemäß Herstellung c) verarbeitet, wobei das Eigelb variiert wurde und als Vergleich auch einmal weggelassen wurde.

**Tabelle 6**

| Sauermolke basierende Zusammensetzungen in Dressings mit und ohne Eigelb | | | | |
|---|---|---|---|---|
| **Nr.** | **Dressing** | **Eigelb** | **Stabilität** | **Textur** |
| 1 | I' | - | Ausreichend | Glatt und homogen |
| 2 | J' | Eigelbpulver* | Sehr gut | Glatt und homogen |
| 3 | J' | Eigelbplasma** | Sehr gut | Glatt und homogen |
| 4 | J' | Eigelbgranula** | Nicht ausreichend | Glatt, jedoch Phasentrennung |

| | | | | |
|---|---|---|---|---|
| *der Firma Sanovo ** aus Eigelbfraktionierung gemäß FEI AiF 15512N | | | | |

Die Stabilität wurde über die Partikelverteilung bestimmt, wobei eine Partikelverteilung von x (50%) µm (Mitte) ausgewertet und wie folgt bewertet wurde:

**Tabelle 7**

| Partikelverteilung von Sauermolke basierende Zusammensetzungen in Dressings mit und ohne Eigelb | | |
|---|---|---|
| **Dressing Nr.** | **Kaltlagerung** | **Warmlagerung** |
| | x (50 %) µm | x (50 %) µm |
| 1 | 17.7 | 28.5 |
| 2 | 8.2 | 8.5 |
| 3 | 4.8 | 4.9 |
| 4 | 23.7 | 26.0 |

Ein Wert:
unter 10 = sehr gut
unter 20 = gut
unter 30 = ausreichend
ab 30 = nicht ausreichend (instabil)

Bei der Warmlagerung zeigen sich höhere Werte, was darauf hindeutet, dass die Struktur instabiler wird.

### Beispiel 4

### Stabilität von Dressings mit Milchpulver (Zugabe bei der Herstellung des Halbfabrikats)

Die Sauermolkebasis I und M wurden zusätzlich mit Buttermilchpulver gemäß der obigen Herstellung a) und b) hergestellt (O) und zum Dressing gemäß Herstellung c) verarbeitet. Diese wurde mit der Buttermilchfreien Mischung verglichen.

**Tabelle 8**

| Partikelverteilung auf Sauermolke basierende Zusammensetzung in Dressings mit Buttermilchpulver | | |
|---|---|---|
| **Dressing** | **Kaltlagerung** | **Warmlagerung** |
| | x (50 %) µm | x (50 %) µm |
| I' (ohne Buttermilchpulver) | 29.0 | 26.2 |
| O' (mit Buttermilchpulver) | 10.9 | 11.0 |
| M' (ohne Buttermilchpulver) | 21.1 | 21.8 |
| O' (mit Buttermilchpulver) | 13.5 | 9.6 |

Ein Wert:
unter 10 = sehr gut
unter 20 = gut
unter 30 = ausreichend
ab 30 = nicht ausreichend (instabil)

Die Zugabe von Buttermilchpulver bewirkt eine Verringerung der Partikelverteilung. Dies zeigt sich sowohl beim Joghurt/Sauermolke-Gemisch als auch bei dem Einsatz von 100% Sauermolke.

## Patentansprüche

1. Sauermolke basierende Zusammensetzung, umfassend:
(a) 50 bis 99.5 Gew.-% Sauermolke,
(b) mindestens 0.3 Gew-.% Milcherzeugnisse, ausgewählt aus der Gruppe bestehend Joghurt, Dickmilch, Creme fraîche, saure Sahne, Schmand, Kefir, Kefir mild,
(c) 0.05 bis 2 Gew.-% Pektin,
(d) 0.1 bis 15 Gew.-% Zucker,
(e) 0 bis 3 Gew.-% Eigelb,
wobei die Komponenten (a) bis (e) sich zusammen zu 100 Gew.-% addieren.

2. Zusammensetzung nach Anspruch 1, **dadurch gekennzeichnet, dass** das Milcherzeugnis b) Joghurt ist, das aus Joghurtmilch stammt und, welche ausgewählt ist aus Mager-, Rahm- und im Fettgehalt standardisierte Milch und der Joghurt ein stichfester oder gerührter Joghurt mit einem Fettgehalt von 0.1 bis 40 Gew. % ist.

3. Zusammensetzung nach mindestens einem der Ansprüche 1 bis 2, **dadurch gekennzeichnet, dass** das Pektin aus der Gruppe bestehend aus Apfelpektin und/oder Citruspektin ausgewählt ist.

4. Zusammensetzung nach mindestens einem der Ansprüche 1 bis 3, **dadurch gekennzeichnet, dass** das Eigelb Eigelbpulver ist.

5. Dressings, Creme, Soßen und/ oder essbare Emulsionen und/oder essbare Schäume, die die Sauermolke basierende Zusammensetzung nach einem der Ansprüche 1 bis 4 umfassen.

6. Dressings, Creme, Soßen und/ oder essbare Emulsionen und/oder essbare Schäume nach Anspruch 5, **dadurch gekennzeichnet, dass** sie weiterhin als optionale Komponente weitere Zusatzstoffe enthalten, die aus der Gruppe ausgewählt sind, die gebildet wird von Süßstoffe, Lebensmittelsäure, Verdickungsmittel, Reduktionsmittel, Aromastoffe, Vitamine, Prebiotische Stoffe, Probiotische Stoffe, Geschmacksverstärker, Wirkstoffe zur Maskierung von unangenehmen Geschmackseindrücken, Antioxidantien, Lebensmittelfarbstoffe und Gemischen davon.

7. Verwendung der Zusammensetzung nach einem der Ansprüchen 1 bis 4 als Basis für Salatdressings/-cremes, Feinkostdressings/-cremes, Mayonnaise, Tzaziki und/oder Dip-Soßen.

## Claims

1. An acid whey composition comprising:
(a) 50 to 99.5 wt. % acid whey,
(b) at least 0.3 wt. % milk products, selected from the group consisting of yoghurt, fermented milk, créme fraîche, sour cream, cultured cream, kefir, kefir mild,
(c) 0.05 to 2 wt. % pectin,
(d) 0.1 to 15 wt. % sugar,
(e) 0 to 3.0 wt. % egg yolk,
wherein the sum of components (a) to (e) comes to 100 wt. %.

2. The composition according to claim 1, wherein said milk product (b) is yoghurt derived from yoghurt milk, which is selected from the group consisting of skimmed milk, cream milk and fat content-standardized milk, said yoghurt being a compact or stirred yoghurt with a fat content from 0.1 to 40 wt. %.

3. The composition according to at least one of claims 1 to 2, wherein said pectin is selected from the group consisting of apple pectin and/or citrus pectin.

4. The composition according to at least one of claims 1 to 3, wherein said egg yolk is egg yolk powder.

5. Dressings, creams, sauces and/or edible emulsions and/or edible foams comprising the acid whey based composition according to any one of claims 1 to 4.

6. Dressings, creams, sauces and/or edible emulsions and/or edible foams according to claim 5, **characterized in that** they further contain as optional component further additives selected from the group consisting of sweeteners, food acid, thickener, reducing agent, Flavorings, vitamins, prebiotic substances, probiotic substances, flavor enhancers, active ingredients for masking unpleasant taste impressions, antioxidants, food colors and mixtures thereof.

7. Use of the composition according to one of claims 1 to 4 as a base for salad dressings/- creams, delicatessens/-creams, mayonnaise, tzatziki and/or Dip sauces.

## Revendications

1. Composition à base de petit-lait acidulé, comprenant :
(a) 50 à 99,5 % en poids de petit-lait acidulé,
(b) au moins 0,3 % en poids de produits laitiers choisis dans le groupe constitué par le yaourt, le lait caillé, la crème fraiche, la crème acidulée, la crème aigre, le kéfir doux,
(c) 0,05 à 2 % en poids de pectine,
(d) 0,1 à 15 % en poids de sucre,
(e) 0 à 3 % en poids de jaune d'oeuf,
la somme des composants (a) à (e) étant de 100 % en poids.

2. Composition selon la revendication 1, **caractérisée en ce que** le produit laitier b) est du yaourt, qui provient de lait de yaourt, qui est choisi parmi le lait écrémé, le lait entier et le lait à teneur en matières grasses normalisée, et le yaourt est un yaourt ferme ou brassé ayant une teneur en matières grasses de 0,1 à 40 % en poids.

3. Composition selon au moins l'une quelconque des revendications 1 à 2, **caractérisée en ce que** la pectine est choisie dans le groupe constitué par la pectine de pomme et/ou la pectine d'agrumes.

4. Composition selon au moins l'une quelconque des revendications 1 à 3, **caractérisée en ce que** le jaune d'oeuf est une poudre de jaune d'oeuf.

5. Sauces, crèmes, jus et/ou émulsions comestibles et/ou mousses comestibles, qui comprennent la composition à base de petit-lait acidulé selon l'une quelconque des revendications 1 à 4.

6. Sauces, crèmes, jus et/ou émulsions comestibles et/ou mousses comestibles selon la revendication 5, **caractérisés en ce qu'**ils contiennent en outre en tant que composant optionnel d'autres additifs, qui sont choisis dans le groupe formé par les édulcorants, les acides alimentaires, les épaississants, les réducteurs, les aromatisants, les vitamines, les substances prébiotiques, les substances probiotiques, les exhausteurs de goût, les agents actifs pour masquer des sensations gustatives désagréables, les antioxydants, les colorants alimentaires et leurs mélanges.

7. Utilisation de la composition selon l'une quelconque des revendications 1 à 4 en tant que base pour des sauces/crèmes pour salades, des sauces/crèmes d'épicerie fine, de la mayonnaise, du tzatziki et/ou des sauces à tremper.
